# EUROPEAN PATENT APPLICATION

(11) **EP 4 528 462 A1**
(43) Date of publication of application: **26.03.2025**
(21) Application number: 22944097.9
(22) Date of filing: 30.05.2022
(51) Int. Cl.: G06F 3/0488

(54) **QUICK ANNOTATION METHODS, APPARATUS, INTERACTIVE TABLET, AND STORAGE MEDIUM**

(71) Applicant: Guangzhou Shizhen Information Technology Co., Ltd., Guangzhou, Guangdong 510663 (CN)
(72) Inventor: ZHONG, Weijie, Guangzhou, Guangdong 510663 (CN); CHEN, Cai, Guangzhou, Guangdong 510663 (CN); GAN, Zhenhao, Guangzhou, Guangdong 510663 (CN)
(74) Representative: Grünecker Patent- und Rechtsanwälte PartG mbB
(86) International application number: PCT/CN2022/095903
(87) International publication number: WO 2023/230753

(57) **Abstract**

Embodiments of the present disclosure disclose a fast annotation method, device, an interactive white board, and a storage medium. The method is applied to an interactive white board, which includes displaying a first interface on a touch sensitive display screen of the interactive white board; receiving a first movement operation of a first or second touch object on the first interface; adding a first annotation layer, and meanwhile adding handwriting or erasing handwriting on the first annotation layer; receiving second movement operation of the first or second touch object; adding handwriting or erasing corresponding handwriting on the first annotation layer based on the second movement operation; receiving first clicking operation of a third touch object on the first annotation layer; and updating a display content of the first interface based on a target clicked by the first clicking operation. This solution can quickly evoke the annotation layer and improve the interaction speed by manipulating the display content in the annotation state.

## Description

### FIELD

The present disclosure relates to the field of human-computer interaction technology, in particular to a fast annotation method, device, an interactive white board, and a storage medium.

### BACKGROUND

With the increasingly rapid development trend of intelligence, types of electronic products that people come into contact with in daily life are becoming increasingly diverse, and people are increasingly inclined to have a better human-computer interaction experience. Interactive electronic products are emerging in an endless stream.

Currently, most annotation operation on interactive electronic products (such as interactive white boards) on the market require clicking an annotation button to trigger annotation operation. Since steps of evoking the annotation operation are complex, and after starting an annotation application, people cannot perform operation, such as selection, click, and page turning, on contents displayed on a screen, it is necessary to exit the annotation application before performing the above operation, and as a result, people cannot control an underlying display content during use of annotation functions.

### SUMMARY

In some embodiments of the present disclosure , a fast annotation method, device, an interactive white board, and a storage medium are provided in order to solve a technical problem that it is complex to evoke an annotation function and a display content cannot be controlled after the annotation function being evoked.

According to a first aspect of the present disclosure, a fast annotation method is provided, which is applied to an interactive white board including a touch sensitive display screen, and the method includes:
displaying a first interface on the touch sensitive display screen;
receiving a first movement operation of a first or second touch object on the first interface;
adding a first annotation layer on the first interface based on the first movement operation, and adding handwriting or erasing handwriting on the first annotation layer based on the first movement operation;
receiving second movement operation of the first or second touch object on the first annotation layer;
adding handwriting on the first annotation layer based on the second movement operation of the first touch object, or erasing corresponding handwriting on the first annotation layer based on the second movement operation of the second touch object;
receiving first clicking operation of a third touch object on the first annotation layer; and
updating a display content of the first interface based on a target clicked by the first clicking operation on the first interface.

According to a second aspect of the present disclosure, a fast annotation method is provided. The interactive white board includes a touch sensitive display screen and an acoustic vibration sensor, the touch sensitive display screen is configured to detect position information of a touch object, the acoustic vibration sensor is configured to detect a vibration signal, and the vibration signal is configured to determine a medium type of the touch object, the method includes:
displaying a first interface on the touch sensitive display screen;
receiving first sensing data of first operation that is performed on the first interface by a touch object. The first sensing data includes first position information detected by the touch sensitive display screen and a first vibration signal detected by the acoustic vibration sensor;
determining that the first operation is movement operation based on the first position information, and determining that the medium type of the touch object is a preset first or second medium type based on the first vibration signal;
adding a first annotation layer on the first interface, and when the medium type of the touch object is a first medium type, adding handwriting on the first annotation layer based on the position information;
receiving second sensing data of second operation that is performed on the first annotation layer by a touch object. The second sensing data includes second position information detected by the touch sensitive display screen and a second vibration signal detected by the acoustic vibration sensor;
if determining that the medium type of the touch object is a preset first medium type based on the second vibration signal, adding corresponding handwriting to the first annotation layer based on the second position information;
if determining that the medium type of the touch object is the preset second medium type based on the second vibration signal, erasing the corresponding handwriting on the first annotation layer based on the second position information; and
if determining that the medium type of the touch object is a preset third medium type based on the second vibration signal, acquiring an operation instruction of the second operation on the first interface based on the second position information, and updating a display content of the first interface.

According to a third aspect of the present disclosure, a fast annotation method is provided, which is applied to an interactive white board. The interactive white board includes a touch sensitive display screen, and the method includes:
displaying a document presentation interface on the touch sensitive display screen;
receiving a first movement operation of a first or second touch object on the document presentation interface;
adding a first annotation layer on the document presentation interface based on the first movement operation, and adding handwriting or erasing handwriting on the first annotation layer based on a first movement operation;
receiving second movement operation of the first or second touch object on the first annotation layer;
adding handwriting on the first annotation layer based on the second movement operation of the first touch object, or erasing corresponding handwriting on the first annotation layer based on the second movement operation of the second touch object;
receiving first clicking operation of a third touch object on the first annotation layer. A medium type of the third touch object is a third medium type; and
updating a display content of the document presentation interface based on a target clicked by the first clicking operation on the document presentation interface.

According to a fourth aspect of the present disclosure, a fast annotation device is provided. The device includes:
a first display unit, configured to display a display content of a first interface;
a first operation receiving unit, configured to receive a first movement operation of a first or second touch object on the first interface;
a first operation response unit, configured to add a first annotation layer to the first interface based on the first movement operation, and add handwriting or erasing handwriting on the first annotation layer based on the first movement operation;
a second operation receiving unit, configured to receive second movement operation of the first or second touch object on the first annotation layer;
a second operation response unit, configured to add handwriting on the first annotation layer based on the second movement operation of the first touch object, or erase corresponding handwriting on the first annotation layer based on the second movement operation of the second touch object;
a third operation receiving unit, configured to receive a second clicking operation of a third touch object on the first annotation layer. The medium type of the third touch object is a third medium type; and
a third operation response unit, configured to update a display content of the first interface based on the target clicked by the second clicking operation on the first interface.

According to a fifth aspect of the present disclosure, a fast annotation device is provided. The device includes:
a second display unit, configured to display a display content of a first interface;
a first data receiving unit, configured to receive first sensing data of first operation that is performed on the first interface by a touch object. The first sensing data includes first position information detected by a touch sensitive display screen and a first vibration signal detected by an acoustic vibration sensor;
a first data response unit, configured to determine that the first operation is movement operation based on the first position information, and determine that the medium type of the touch object is a preset first or second medium type based on the first vibration signal;
to add a first annotation layer on the first interface, and when the medium type of the touch object is a first medium type, add handwriting on the first annotation layer based on the position information;
a second data receiving unit, configured to receive second sensing data of second operation that is performed on the first annotation layer by a touch object. The second sensing data includes second position information detected by the touch sensitive display screen and a second vibration signal detected by the acoustic vibration sensor;
a first media response unit, configured to, if determining that the medium type of the touch object is a preset first medium type based on the second vibration signal, add corresponding handwriting to the first annotation layer based on the second position information;
a second media response unit, configured to, if determining that the medium type of the touch object is a preset first medium type based on the second vibration signal, add corresponding handwriting to the first annotation layer based on the second position information; and
a third media response unit, configured to, if determining that the medium type of the touch object is a preset third medium type based on the second vibration signal, acquire an operation instruction of the second operation on the first interface based on the second position information, and update a display content of the first interface.

According to a sixth aspect of the present disclosure, an interactive white board is provided. The interactive white board includes: one or more processors; a memory, configured to store one or more programs. When the one or more programs are executed by the one or more processors, the one or more processors implement a fast annotation method according to the embodiments of the present disclosure.

According to a seventh aspect of the present disclosure, a storage medium is provided, which stores computer executable instructions. The computer executable instructions are used to execute a fast annotation method according to the embodiments of the present disclosure when executed by a computer processor.

In the embodiment of the present disclosure, the touch sensitive display screen of the interactive white board displays the first interface; receives the first movement operation of the first or second touch object on the first interface; adds the first annotation layer on the first interface based on the first movement operation, and adds handwriting or performs an erasing operation on the first annotation layer based on the first movement operation; receives the second movement operation of the first or second touch object; adds handwriting on the first annotation layer based on the second movement operation of the first touch object, or erases corresponding handwriting on the first annotation layer according to the second movement operation of the second touch object; receives first clicking operation of a third touch object on the first annotation layer, and the medium type of the third touch object is the third medium type; and updates a display content of the first interface based on a target clicked by the first clicking operation on the first interface. Based on the medium type of the touch object, different operation responses are performed for touch objects of different medium types, such as adding handwriting, erasing handwriting, and the like, and writing and erasing can be performed as the touch object drops on the screen. The operation step for evoking annotations are simpler and faster, in addition, after performing annotations, fingers may be used to operate display contents without exiting the annotation application, which can meet the growing interaction needs of users, and provide users with a good interaction experience.

### BRIEF DESCRIPTION OF THE DRAWINGS

Fig. 1 is a flowchart of a fast annotation method according to an embodiment of the present disclosure.
Fig. 2 is a schematic diagram of a first interface displayed on an interactive white board according to the embodiment of the present disclosure.
Fig. 3 is a schematic diagram of displaying handwriting on a first annotation layer according to the embodiment of the present disclosure.
Fig. 4 is a schematic diagram of the first interface before updating a display content, according to the embodiment of the present disclosure.
Fig. 5 is a schematic diagram of the first interface after updating the display content, according to the embodiment of the present disclosure.
Fig. 6 is a schematic diagram in which finger movement operation is not responded, according to the embodiment of the present disclosure.
Fig. 7 is a schematic diagram of performing multi-touch operation according to the embodiment of the present disclosure.
Fig. 8 is a flowchart of another fast annotation method according to the embodiment of the present disclosure.
Fig. 9 is a structural block diagram of a fast annotation device according to an embodiment of the present disclosure.
Fig. 10 is a structural block diagram of another fast annotation device according to another embodiment of the present disclosure.
Fig. 11 is a structural diagram of an interactive white board according to an embodiment of the present disclosure.

### DESCRIPTION OF THE PREFERRED EMBODIMENTS

In order to make a purpose, a technical solution, and advantages of the present disclosure clearer, the specific embodiments of the present disclosure will be further described in detail with the accompanying drawings. It is understood that a specific embodiments described herein are only used to explain the present disclosure, not to limit it.

It should be noted that for the convenience of description, the drawings only show some but not all of the contents related to the present disclosure. Before discussing exemplary embodiments in more detail, it should be mentioned that some exemplary embodiments are described as processes or methods depicted as flowcharts. Although flowcharts describe operation (or steps) as sequential processing, many operation thereof may be implemented in parallel, concurrently, or simultaneously. In addition, the sequence of each operation may be rearranged. The process may be terminated when its operation is completed, but may also have additional steps not included in the drawings. The terms "first", "second", and the like in the description, claims, and drawings are used to distinguish similar objects without necessarily describing a particular order or sequence. In addition, "and/or" in the description and claims indicates at least one of the connected objects, and the character "/" generally indicates that the associated object is an "or" relationship.

The fast annotation method of the present disclosure may be applied to an interactive white board, which may be an integrated device that controls contents displayed on a display screen and realizes human-computer interaction through touch technology, integrating one or more functions such as projectors, electronic whiteboards, screens, audio, televisions, and video conference terminals. Obviously, interactive white boards do not include restrictions on surface features of display surfaces, for example, the surface features of interactive white boards may be planar, curved, or a combination of multiple planes.

Alternatively, an interactive white board is installed with at least one operating system. The operating system includes but is not limited to Android, Linux, Windows, and Huawei Harmony systems. The operating system is configured to control and coordinate the interactive white board and an external device, so that various independent hardware in the interactive white board may work as a stable overall coordination. An architecture level of the operating system is defined as a system layer. On the basis of the system layer, interactive white boards are installed with applications developed to meet different fields and issues of users, and the corresponding architecture level is an application layer. In an optional embodiment description of this solution, the interactive white board may be installed with at least one application having a writing function. Therein, the application having the writing function may be an application that comes with the operating system, or may also be an application downloaded from a third-party device or server. Optionally, in addition to the writing function based on the touch operation, the application also has other editing functions, such as deleting functions, inserting tables, inserting pictures, inserting illustration graphics, drawing tables, drawing graphics, and other functions. For example, annotation applications, whiteboard applications, and the like belong to the above described applications having writing functions.

The embodiment of the present disclosure will be further described in conjunction with the accompanying drawings.

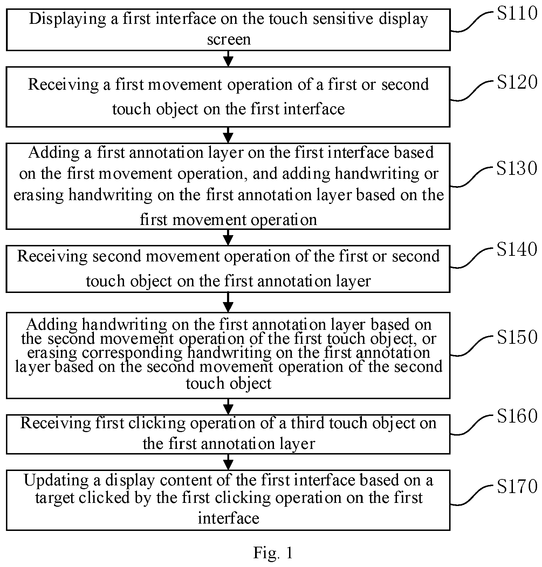

Fig. 1 is a flowchart of a fast annotation method according to an embodiment of the present disclosure. This method may be applied to an interactive white board, and the interactive white board includes a touch sensitive display screen. It should be known that the interactive white board includes at least one touch sensitive display screen, and the touch sensitive display screen is a display screen having a touch function, such as an infrared display screen, a capacitive display screen, a resistive display screen, an electromagnetic display screen, or a pressure sensitive display screen. On the touch sensitive display screen, users may touch the touch sensitive display screen with their fingers or styluses to achieve touch operation. Accordingly, the interactive white board detects a touch position and responds based on the touch position so as to achieve touch functions.

As shown in Fig. 1, steps of this method include:
Step S110: displaying a first interface on the touch sensitive display screen.

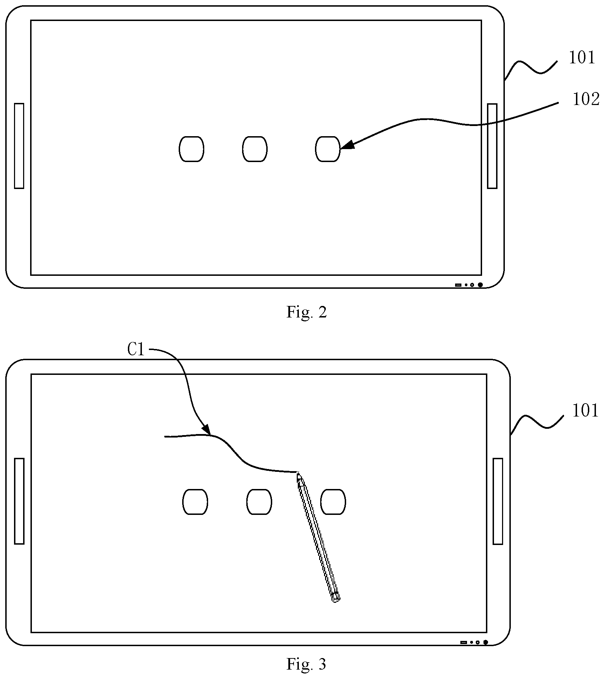

In an implementation process of this solution, the touch sensitive display screen displays a display content of the currently displayed first interface. The first interface refers to an interactive interface displayed by the current touch sensitive display screen. It can be understood that the interactive interface is an interface of an application on an interactive white board for receiving and/or displaying information, such as a document editing application, whose interactive interface is mainly configured to receive document content input by users for being displayed; a video playback application, whose interactive interface is mainly configured to display changing video images. Similarly, for a display desktop on the interactive white board, which is also the interactive interface displayed by the current touch sensitive display screen, as shown in Fig. 2, the touch sensitive display screen of the interactive white board 101 displays the first interface, and the first interface is a display desktop with multiple application icons 102 displayed on the current interactive white board.

Step S120, receiving a first movement operation of a first or second touch object on the first interface.

Step S130, adding a first annotation layer on the first interface based on the first movement operation, and adding handwriting or erasing handwriting on the first annotation layer based on the first movement operation.

For example, an interactive white board includes a touch sensitive display screen and an acoustic vibration sensor. The interactive white board displays an application interface, displays a desktop, and the like through the touch sensitive display screen, while the acoustic vibration sensor is configured to detect a vibration signal of a touch object. The acoustic vibration sensor may be directly installed on a surface of the touch sensitive display screen. After the acoustic vibration sensor detects a corresponding vibration signal, the interactive white board may process the detected vibration signal so as to determine a medium type of the touch object. Alternatively, the medium type of the touch object may be determined by a manner of comparing the vibration signal with a pre-stored vibration signal corresponding to the medium type of the touch object, a manner of feature extraction or a manner of neural network training.

The first touch object is of a first medium type, the second touch object is of a second medium type, and the third touch object is of a third medium type. The first medium type, the second medium type, and the third medium type may be three medium types pre-stored on the interactive white board. It is conceivable that during the use of interactive white boards, users may use touch objects of different medium types such as a stylus head and tail and a finger to respond to the touch sensitive display screen. For example, if the first touch object may be the stylus head, the first medium type corresponds to the medium type of the stylus head. If the second touch object may be the stylus tail, the second medium type corresponds to the medium type of the stylus tail. If the third touch object may be a finger, the third medium type corresponds to the medium type of the finger.

The first movement operation on the first interface may be sliding operation, that is, sliding of the first or second touch object on the touch sensitive display screen. For example, the touch sensitive display screen currently displays a Word document, that is, a content of the document is displayed on the first interface. If the stylus head or tail slides on the touch sensitive display screen, a first annotation layer is added by placing at the top to the touch sensitive display screen. For the sliding of the stylus head, if the user writes a text or draws a symbol on the touch sensitive display screen with a stylus head, the corresponding handwriting is displayed on the first annotation layer. For the sliding of the stylus tail, an erasing operation is performed on the first annotation layer. For the erasing operation, it can be understood that when the user uses the stylus tail to slide on the touch sensitive display screen, the interactive white board executes a response of generating the first annotation layer and performing the erasing operation after receiving the sliding of the stylus tail, that is, the first operation, thereby achieving the effect of writing as the touch object drops on the screen, which provides users with a convenient and fast annotation solution, and improves user experiences.

As shown in Fig. 3, on a display desktop of the interactive white board 101, when the user uses a stylus head to slide on the touch sensitive display screen, the interactive white board 101 adds a first annotation layer on the display desktop, and displays handwriting C1 on the first annotation layer. The first annotation layer is a display window of the annotation application, also referred to as an annotation application window in this embodiment of the present disclosure. It can be understood that the first annotation layer is configured to display the handwriting. When the first annotation layer uses a transparent annotation layer, the first annotation layer cannot be displayed in the figure, but it does not mean that the first annotation layer has not been generated in the interactive white board 101.

In some embodiments, the touch sensitive display screen performs an erasing operation on a sliding position of the stylus tail, while in the view of the user, the response of the touch sensitive display screen to the erasing operation is not a visual response. For example, if there is no written handwriting at the position of the erasing operation, the content displayed on the touch sensitive display screen does not have a visual response. In some embodiments, the touch sensitive display screen performs an erasing operation on the sliding position of the stylus tail. In the view of the user, it is possible to clearly perceive the sliding position of the stylus tail. The touch sensitive display screen provides a visual response, such as generating an identification symbol for erasing. In this case, even if there is no written handwriting at the position of the erasing operation, the corresponding identification symbol, such as an eraser icon, is also displayed on the touch sensitive display screen.

The first annotation layer may be a layer interface, such as the annotation display layer, of a transparent annotation layer, a light-colored annotation layer, or other layer interfaces, the layer interface may be configured to display handwriting. It can be understood that the annotation display layer and the application display layer where the Word document is located are independent of each other, and then for the content displayed on the annotation display layer and the content displayed on the application display layer, the two do not interfere with each other.

It should be noted that in the first interface, such as the display desktop, there are multiple layer interfaces, for example, the multiple layer interfaces include the annotation display layer, the application display layer, and the control display layer. The annotation display layer is located on the application display layer. Therefore, in a scene of annotating Word documents, the first annotation layer, namely the annotation display layer, is located on the application display layer where Word document is located.

The control display layer may be located on the annotation display layer, for example, controls such as page turning controls, annotation controls, and attribute controls are displayed on the control display layer. The controls may be located on a side of the display desktop, for example, the controls are displayed in the form of sidebars on the display desktop. The control display layer may further be located below the annotation display layer, and there are no specific limitations in the present disclosure.

Step S140, receiving second movement operation of the first or second touch object on the first annotation layer.

Step S150, adding handwriting on the first annotation layer based on the second movement operation of the first touch object, or erasing corresponding handwriting on the first annotation layer based on the second movement operation of the second touch object.

It can be seen from Fig. 3 that after generating the first annotation layer, for the sliding of the stylus head or tail on the first annotation layer, that is, the second movement operation of the stylus head or tail, a corresponding response is made on the first annotation layer. For example, if the user uses the stylus head to write on the first annotation layer, a corresponding handwriting is added on the first annotation layer. The handwriting is added based on a sliding position and a sliding path of the stylus head. For the second movement operation of the stylus tail, only the handwriting on the sliding path of the stylus tail is erased. For example, if the user uses the stylus tail to slide on the first annotation layer, for the handwriting on the handwriting path of the stylus tail, the handwriting is correspondingly erased from the first annotation layer. For the case where there is no handwriting on the sliding path of the stylus tail, for example, for the case where a first annotation layer is added on the first interface, and the handwriting on the first annotation layer is located on a side of the touch sensitive display screen, while the sliding path of the stylus tail is only on the other side of the touch sensitive display screen, there is no handwriting on the sliding path of the stylus tail, and the handwriting is not erased.

Step S160, receiving first clicking operation of a third touch object on the first annotation layer.

Step S170, updating a display content of the first interface based on a target clicked by the first clicking operation on the first interface.

The first clicking operation is clicking operation performed by a third touch object on the first annotation layer. For the first clicking operation of the third touch object, the interactive white board responds to this operation not on the first annotation layer, but on the application display layer, and updates the display content of the first interface based on the target clicked by the first clicking operation. The target includes application icons, operation controls, hyperlinks, or the first interface itself.

In an embodiment, the third touch object may be a finger. For a click of finger on a touch sensitive display screen, the interactive white board updates the display content of the first interface on the touch sensitive display screen. For example, if a user clicks on an application icon on the display desktop of the touch sensitive display screen with a finger, the interactive white board opens the application and displays the content of the application on the first interface, or during web browsing, the first interface displays contents of the web page. If the user clicks on a page turning control on the touch sensitive display screen with a finger, the interactive white board updates the display contents of the web page, such as displaying text and/or images from the next or previous page.

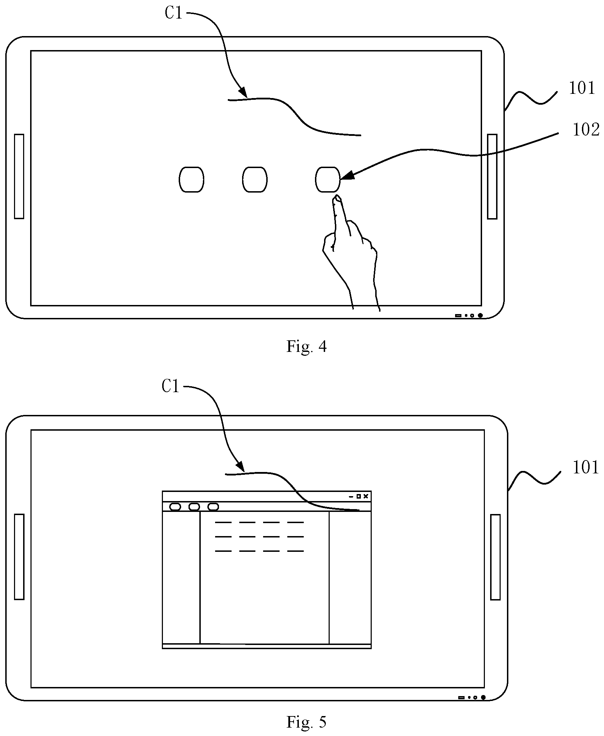

As shown in Fig. 4, when the first interface currently displays the content of the display desktop. After generating the first annotation layer, the user may use the stylus head to generate the handwriting C1 on the first annotation layer. After the user clicks on an application icon 102 on the display desktop with a finger, as shown in Fig. 5, the display content of the first interface is updated to display the document content, that is, in the view of the user, the finger of the user passes through the annotation display layer and operates directly on the application display layer.

As an example, during the demonstration of a PPT or PDF document, if the PPT or PDF document is displayed on the display desktop, when the user uses a stylus to move on the touch sensitive display screen, a handwriting corresponding to a movement path of the stylus head is displayed on the generated first annotation layer. That is, the user may add annotation content on the first annotation layer, and the user may further touch the control on the display desktop with the finger, so as to display the display content of the desktop. If there is a page turning control on the display desktop, the user may touch the page turning control to turn a page of the PPT document, new contents of the PPT document are displayed, while the annotation content on the first annotation layer remains displayed, thus achieving updates of the display content on the interactive white board, so that it is not necessary to close the first annotation layer for updating the content, and also not necessary to reopen the first annotation layer after the update.

It is conceivable that the annotation content on the first annotation layer may also be displayed together with the display content. For example, during the demonstration of PDF documents, there is a scrolling display control on the display desktop, and the control is configured to control the scrolling display of PDF documents on the display desktop. Therefore, while the PDF document is displayed by scrolling, the annotation content on the first annotation layer may also be synchronously displayed by scrolling.

In one embodiment, multiple controls may be displayed in the form of toolbars on the display interface. In a corresponding display area of the control on the display interface, operation, such as clicking operation, move operation, etc., by any type of touch object in the above display area is responded as the touch on the control by the interactive white board, and then the interactive white board may execute corresponding response based on the corresponding control.

From the above solution, it can be seen that this solution may achieve writing and erasing as the touch object drops on the screen, which makes the operation steps for annotation more convenient and quick. Moreover, after generating an annotation layer, the user may use a finger to operate the display content without exiting the annotation application, that is, the display content may be updated and annotations may continue without closing the annotation layer, thereby providing a good interactive experience for users, and meeting the growing interactive needs of users. In scenarios where annotation applications need to be used on interactive white boards, the solution of the present disclosure can enable users to work more quickly and efficiently, resulting in an improved user experience.

In an application scenario, a user is using an interactive white board that implements the method of the present disclosure for teaching work, for example, an interactive tablet is used to display text content, the user may perform click, page-turning, and other operation on the display content by using the finger. The user may also click on the display content by using a stylus, such as clicking on the page-turning control on a touch sensitive display screen, so as to achieve page turning of the displayed text content.

When the user needs to annotate the text content, if the user may use a stylus head to directly slide on the touch sensitive display screen, an annotation layer is generated. Correspondingly, the handwriting is displayed on the annotation layer, and from the perspective of the user, the handwriting is displayed on the text content, forms annotations.

When the user needs to erase the annotation content, the user may use the stylus tail to directly slide on the touch sensitive display screen, and correspondingly, the annotation on the sliding path of the stylus tail, i.e. the handwriting on the annotation layer, is erased. From the perspective of the user, the annotations on the text content are gradually cleared under the sliding of the stylus tail.

In an embodiment, the interactive white board receives a second clicking operation of the first or second touch object on the first interface, and updates the display content of the first interface based on the second clicking operation.

The second clicking operation may be the operation performed by the user when clicking on the touch sensitive display screen with the stylus head or tail. For example, the content currently displayed on the first interface is the display desktop, and if the user clicks on an application icon on the display desktop of the touch sensitive display screen with the stylus head or tail, the interactive white board opens the application and displays the content of the application on the first interface of the touch sensitive display screen, the first interface is updated from the display desktop to the application content.

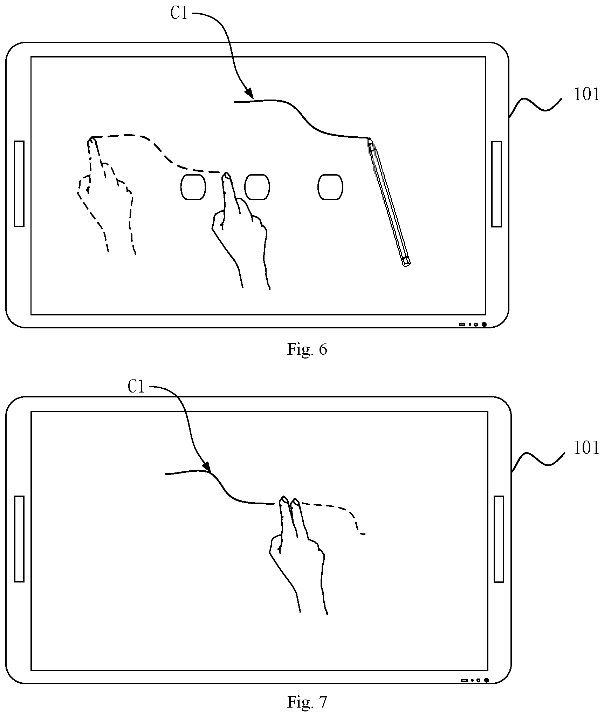

In some embodiments, if the third movement operation of the third touch object on the first annotation layer is determined to be received, the third movement operation is not responded to. It can be understood that when the user uses a finger to slide on the first annotation layer, the first annotation layer of the interactive white board does not respond to the third movement operation, that is, handwriting is not displayed on the first annotation layer. As shown in Fig. 6, after generating the first annotation layer, for sliding on the touch screen with the finger by the user, the handwriting thereof cannot be displayed on the first annotation layer, while for sliding on the touch sensitive display screen with the stylus head by the user, the corresponding handwriting C1 is generated on the first annotation layer.

It can be seen that in this solution, the interactive white board does not respond to the writing of the user with the finger. However, for touch control of the user with the finger, the interactive white board can respond so as to avoid accidental touch with the finger, which can cause the first interface to generate a first annotation layer and display handwriting on the first annotation layer. In addition, for sliding of the stylus on the touch sensitive display screen, that is, for writing of the user with the stylus, the interactive white board can respond and provide users with a fast annotation function, which not only allows for fast annotation writing, but also effectively avoids situations caused by accidental touch of the finger, thereby improving the interaction experience of the user.

In an embodiment, the interactive white board receives multi-touch operation of the third touch object on the first annotation layer, and erases the corresponding handwriting on the first annotation layer based on the multi-touch operation.

It can be understood that after the first annotation layer is generated, the third touch object performs multi-touch operation on the first annotation layer, and the response of the interactive white board is to erase the handwriting at the corresponding position on the first annotation layer. For example, the user annotates on the interactive white board. When the user needs to erase the wrong annotation, the user may use the palm or the back of the hand to perform erasing operation on the touch sensitive display screen. At this time, the touch sensitive display screen detects multiple touch points at the same time, that is, it detects multi-touch of the palm or the back of the hand, therefore, the handwriting on the sliding path of the palm or the back of the hand is cleared. Alternatively, the attribute of multi-touch operation may be further defined, for example, the distance between multiple touch points and the area formed by multiple touch points may be further defined (for example, the upper and lower limit values of the area are defined), so as to more clearly distinguish the erasing operation of the palm/back.

In one embodiment, the user may further perform erasing operation on the touch sensitive display screen by closing multiple fingers together. Fig. 7 is a schematic diagram of performing multi-touch operation according to the embodiment of the present disclosure. As shown in Fig. 7, the first annotation layer has been generated on the touch sensitive display screen of the interactive white board 101, and the handwriting C1 exists on the first annotation layer. The user may perform multi-touch operation by closing two fingers together. The position of multi-touch operation is located on the handwriting C1, and the handwriting on the corresponding position is erased. It is conceivable that when the user performs multi-touch operation along the path of the handwriting C1, for example, if the user closes two fingers together to slide along the handwriting C1, the handwriting C1 is erased.

It should be noted that for multi-touch operation, closing two fingers together is a schematic multi-touch mode. In practical application, it may also be modes of palm erasing, hand back erasing, closing more fingers together or other preset multi-touch modes.

It can be seen from the above solution that the present disclosure may erase annotations based on the multi-touch operation of the third touch object, and provide a fast easing manner for the easing of annotations, which enables users to work more quickly and efficiently, thereby improving the interactive experience.

In an embodiment, an annotation control is displayed on the first interface. When the touch sensitive display screen displays the first interface, the touch object clicks on the annotation control. Therein, the touch object may be any of the first, second, and third touch objects, such as the stylus head, the stylus tail, and the fingers. After the touch object clicked on the annotation control, a second annotation layer is added to the first interface. It should be noted that after generating the second annotation layer, the fourth movement operation of the touch object is located on the second annotation layer, and correspondingly, and handwriting are correspondingly added or erased on the second annotation layer.

For the fourth movement operation, such as sliding, of the stylus head on the second annotation layer, the corresponding handwriting is displayed on the second annotation layer. For the fourth movement operation, such as sliding, of the stylus tail on the second annotation layer, the corresponding handwriting is erased on the second annotation layer. For the fourth movement operation, such as sliding, of the finger on the second annotation layer, the corresponding handwriting is displayed on the second annotation layer.

In an application scenario, the first interface is displayed on the touch screen of the interactive white board, and there are annotation controls displayed on the first interface. When the user clicks on the annotation control with their fingers, a second annotation layer is added to the first interface. After generating the second annotation layer, when the user uses their fingers to slide on the second annotation layer, correspondingly, handwriting are added on the second annotation layer, so that the user can see the handwriting on the first interface. It is conceivable that after clicking on the annotation control, the user may perform clicking operation outside the display area corresponding to the control such as the annotation control through the touch object, corresponding handwriting is generated on the second annotation layer, while it is not possible to control the display content on the application display layer.

In an embodiment, receiving third clicking operation of the touch object on an annotation control includes: receiving a third clicking operation of a touch object on an annotation control in a state where the first annotation layer is not displayed.

It can be understood that in this embodiment, for the click of the touch object on the annotation control, the interactive white board may receive the third clicking operation of the touch object on the annotation control only when the first annotation layer is in a non-display state, thereby generating a second annotation layer, so that the touch object can add or erase handwriting on the second annotation layer.

From the above solution, it can be seen that the user can click on the annotation control through any type of touch object, and the interactive white board provides the user with an annotation scheme through a conventional manner. Even if users may write on the generated second annotation layer through any type of touch object, the situation where the user cannot annotate without a stylus is avoided.

In some embodiments, an attribute control is displayed on the first interface. The attribute control may be configured to control a display attribute of handwriting, such as the color, line type, and other items displayed by the handwriting. The selection operation of the third touch object is performed on the attribute control. The selection operation includes clicking, sliding, and other operation on the attribute control by the third touch object. The display attribute of the handwriting corresponding to the third touch object is changed based on the selection operation.

For example, the first interface is displayed on the touch screen of an interactive white board, and an attribute control is displayed on the first interface. The user clicks on the color item on the attribute control with the finger, so as to select the color of the handwriting to be added. When the user uses the stylus head or fingers to annotate and write on the annotation layer, the generated handwriting is displayed in the selected color. In addition, for the generated handwriting, the handwriting may be clicked on with a finger for be selected, and then the color item on the attribute control is clicked on with a finger to select a color for the handwriting.

In some embodiments, a mode switching control is displayed on the first interface, which is configured to control the startup of the fast annotation mode. The fast annotation mode is a working mode of the interactive white board applying the fast annotation method of the present disclosure. Before the interactive white board receives the second clicking operation of the first or second touch object on the first interface, the interactive white board receives a start operation of the mode switching control. The start operation may be started by clicking or sliding, for example, the first, second, or third touch object is used to click or slide on the mode switching control. The interactive white board responds to the start operation and start the fast annotation mode.

This solution can provide users with a selection of whether to select fast annotation mode by providing the mode switching control, which provides the user with more flexible usage operation and improves usage experience for the user. For users who are accustomed to stylus-free operation, it is also to be compatible with their usage habits, and pay attention to their usage habits and experience, and furthermore, provide users with a better interaction environment and experience.

In some embodiments, for the first clicking operation of the third touch object, if the position clicked by the first clicking operation on the first interface is a writing application icon, the interface of the writing application is opened and the first annotation layer is closed. If a fifth movement operation of the touch object is received on an interface of the writing application, handwriting is added or erased on or from the interface of the writing application based on the fifth movement operation.

Writing application refers to an application that allows users to perform writing, display, and other operation. Writing application may be used to generate handwriting based on the writing operation of the user on the interface of the writing application, or to insert and display multimedia elements on the interface of the writing application. The multimedia elements may include graphics, images, tables, documents, audio files, and/or video files. In the interface of writing applications, users can perform operation such as writing, drawing, and erasing similar to physical blackboards, and further have better digital functions such as moving, saving, scaling, inserting images, adjusting colors, and setting stroke thickness. In practical applications, writing applications may also be named whiteboard applications, electronic whiteboard applications, collaborative whiteboard applications, and other names, regardless of how the names are changed, any application used to achieve the above functions is equivalent to the writing application of the present disclosure.

It can be understood that in the case where the first annotation layer has already been generated, if the user clicks on the writing application icon in the application display layer with a finger, the interactive white board opens the interface of the writing application and closes the first annotation layer. The user may write or erase handwriting on the interface of the writing application, for example, the user may use the finger or stylus head to add handwriting, the user may use the stylus tail to erase their handwriting.

In one embodiment, when handwriting is displayed on the first annotation layer, the interactive white board responds to the first clicking operation of the user on the writing application icon, thereby opening the interface of the writing application and closing the first annotation layer, while the existing handwriting on the first annotation layer, that is, the annotation content, can be input into the interface of the writing application for being re-displayed on after the interface of the writing application is opened.

It is conceivable that before inputting annotation content into a writing application, the interactive white board may further provide users with a selection of whether to input it, for example, the interactive white board may further provide a pop-up window for selecting whether to input annotation content, so that whether to input annotation content can be flexibly selected based on their selection.

By inputting existing annotation content into a writing application, the interactive white board may provide convenience for users when the user need to use both the writing application and annotation content at the same time, so that the user may quickly utilize annotation content without the need to store the annotation content separately, which can reduce user operation and improve their interaction experience.

In one embodiment, the handwriting may also be moved. If corresponding handwriting is displayed on the first annotation layer, in response to the movement operation of the handwriting, the handwriting may be moved to the corresponding position based on the movement path of the touch object, so that the user may conveniently and quickly move the required handwriting to the selected position. The operation is simple and helps to improve the user experience.

In one embodiment, a writable range of the first annotation layer is smaller than a display range of the first interface. During the process of moving the handwriting, when the handwriting is moved to a boundary of the writable range of the first annotation layer, that is, when the handwriting is about to be moved out of the writable range of the first annotation layer, the first annotation layer may expand the writable range with the movement of the handwriting, so as to ensure that the handwriting is always within the writable range of the first annotation layer, so that the writable range is infinitely expanded and the effect of infinite writing is achieved.

It is conceivable that the first annotation layer may be scaled to expand or reduce the writable range, so that the handwriting with the same size occupy different areas on the first annotation layer with different scaling ratios, thereby achieving the effect of expanding or reducing the writable range. The operation is simple and convenient, thereby not only improving writing efficiency, but also achieving the effect of infinite writing.

In one embodiment, the first interface on the touch sensitive display screen displays a document presentation interface. When there is a hyperlink on the document presentation interface and the user clicks on the hyperlink with a finger, the interactive white board opens the hyperlink and enters a page linked by the hyperlink, that is, updates the display content of the first interface.

A hyperlink is an identifier displayed on the display screen for linking to other objects. Web page links, text hyperlinks, etc. are all hyperlinks mentioned in the present disclosure. For example, in an application scenario, taking an interactive white board as an example, the user may play PPTs (PowerPoint) through the interactive white board. The user may annotate the PPT content by using the stylus head, and also use the stylus tail to erase the annotated content. In the display content of the PPT, there are hyperlinks, such as web links. The user uses a finger to click on the hyperlinks, and the interactive white board enters the objects connected by the hyperlinks. If the hyperlinks are connected to a website, when users use a finger to click on the hyperlinks, the website is opened. The touch sensitive display screen of the interactive white board displays contents in the website. It is conceivable that when the interactive white board is in a networkless state, the website cannot be accessed, but corresponding content, such as "there is no network for connection currently, the website cannot be entered", is also displayed on the touch sensitive display screen.

When a user clicks on a hyperlink with a stylus, the interactive white board does not respond, that is, if the touch object currently clicked on the hyperlink is not a finger, the display content on the first interface of the touch screen is not updated. For example, in an application scenario, if a text hyperlink appears in the PPT presentation content, and the text hyperlink is connected to a certain slide in the PPT, when the user clicks on the text hyperlink with a finger, the content of the slide connected by the text hyperlink is displayed on the interactive white board. When the user clicks on the link identifier with the stylus head and/or tail, the interactive white board does not respond to this operation, and the display content on the first interface remains displayed. It is conceivable that if the content currently displayed on the PPT is text or images, after the user clicks on the hyperlink with the stylus head and/or tail, the touch sensitive display screen continues to display the text or images on the PPT. If a video is played on the PPT, after the user clicks on the hyperlink with the stylus head and/or tail, the touch sensitive display screen maintains the playback of the video content. By limiting that only the finger may click on hyperlinks with a finger, mis-operation during the process of writing or erasing through the stylus head and/or tail can be avoided.

In some embodiments, the first interface is a document presentation interface, and a page turning control is also displayed on the first interface. During the annotation process of the PPT, a first annotation layer is added to the first interface, and if the page of the PPT needs to be turned, the user may click the page turning control with the finger for page-turning of the PPT. If the page turning control corresponds to the next page of the current PPT page, when the user clicks the page turning control with a finger, the first interface is updated to the next page of the current PPT page.

It is detected that the interaction effect of the third touch object (i.e. finger) on the page turning operation of a hyperlink or document presentation is similar to that of the clicking operation of the third touch object (i.e. finger) on the icon in Fig. 5, that is, when opening the hyperlink or turning the page, the first annotation layer and the display of the existing handwriting in the first annotation layer are maintained.

In one embodiment, the document presentation interface displayed on the touch sensitive display screen may be the display of first screen casting data transmitted by a terminal device such as a mobile phone, a computer, etc. through networks, data cables, etc. on an interactive white board. The user performs clicking operation on the interactive white board, for example, the user clicks on the page turning control on the presentation interface with a finger, the interactive white board generates corresponding operation data and sends the operation data to the terminal device. Therefore, after the terminal device receives the operation data, the terminal device responds to the operation data, updates its display content thereon, and implements operation on the terminal device to update the document presentation interface thereon. For example, by turning a page or opening a hyperlink on the document presentation interface, the terminal device generates second screen casting data and sends it to the interactive white board. The interactive white board may update the display content of the document presentation interface based on the second screen casting data, thereby achieving page-turning and other updates and changes of the document presentation interface displayed on the interactive white board. In addition, when the user uses the stylus head or tail to write or erase handwriting on the document presentation interface, the interactive tablet may also send corresponding operation data to the terminal device, so that the same handwriting data as the interactive white board is displayed on the terminal device.

In one embodiment, a save control is displayed on the first interface. The interactive white board receives a fourth clicking operation on the save control from a touch object such as a stylus head, stylus tail, or finger. The interactive white board saves all handwriting, that is, the annotation content, on the first annotation layer. The annotation content may be saved in a format that cannot be edited again, such as saving the annotation content as an image. The annotation content may also be saved in a format that allows for re-editing of the handwriting. When the saved file is opened, a first annotation layer is generated, and the handwriting is regenerated on the first annotation layer based on the annotation content.

In one embodiment, for the sixth movement operation of the fourth touch object, a corresponding handwriting is generated on the first annotation layer, and the handwriting color of the handwriting is different from the handwriting color of the handwriting corresponding to the first touch object.

For example, if the first touch object is Stylus I, the fourth touch object is Stylus II, and Stylus I and Stylus II are styluses with two different materials, and the handwriting of Stylus I on the first annotation layer is displayed in black, when the user uses Stylus II for annotation writing, the handwriting of Stylus II on the first annotation layer is displayed in a color different from black, such as red.

It is worth noting that the handwriting color corresponding to the handwriting of Stylus II may be preset, that is, the handwriting colors corresponding to Stylus I and Stylus II are pre-stored on the interactive white board. When the corresponding handwriting needs to be displayed, the pre-stored handwriting color is displayed.

In addition, the handwriting color corresponding to the handwriting of Stylus II may also be randomly assigned by the interactive white board. For example, when the current handwriting color of Stylus I is black, the interactive white board may randomly assign a color other than black as the handwriting color of Stylus II.

From this, it can be seen that when using multiple different styluses for writing, the interactive white board may generate handwriting with different handwriting colors correspondingly, which helps to distinguish the corresponding handwriting of different handwriting styluses, so that multiple parties can write at the same time or one party can write multiple styluses, and the corresponding handwriting can be clearly distinguished, thereby effectively avoiding tedious operation caused by frequent changes in handwriting colors.

In the interactive white board, the annotation application is an application that implements a fast annotation method. The annotation application window is displayed transparently through ***WindowChrome*** attribute. After setting ***WindowChrome*** attribute, the first annotation layer is displayed transparently in the embodiment of the present disclosure. In addition, a window style may be set to ***WS_EX_TRANSPARENT*** through ***SetWindowLongPtr*** function, which implements window penetration. It can be understood that when the window may be penetrated, the operation object of the touch operation is not the annotation application window, but the next layer window of the annotation application window, such as screen content. Technically speaking, when the window may be penetrated, the system sends the received touch data to the application in the lower layer of the window for response. Therefore, such a solution can be implemented that the annotation display layer where the first annotation layer is located is passed through and operation is performed on the application display layer of the lower layer application.

Annotation application receives ***WM_INPUT*** message through ***RegisterRawInputDevices.*** When a touch box encapsulates touch data, a recognition result of the touch object material is encapsulated and the agreed width and height value is sent based on the device type. Since there is no identification for ***Down***, ***Move***, or ***Up*** in the ***WM_INPUT*** message, a second digit of the encapsulated touch data is used to distinguish the types of ***Down**, **Move**,* or ***Up*** operation of the touch point. ***Down*** indicates that the touch object has started to contact with the touch sensitive display screen, ***Move*** indicates that the touch object is moving on the touch sensitive display screen, and ***Up*** indicates that the touch object has left the touch sensitive display screen. Based on the encapsulated touch data mentioned above, when judging whether a stylus-type device such as a stylus touches a touch sensitive display screen, the annotation application removes ***WS_EX_TRANSPARENT*** style through ***SetWindowLongPtr*** function to achieve window impenetrability, so that the first annotation layer cannot be penetrated, and the touch data corresponding to the touch operation generated on the first annotation layer is responded to by the annotation application. In the case of the stylus head, the mode is switched to the writing mode, and in the case of the stylus tail, the mode is switched to the erasing mode, thereby achieving writing and erasing functions. When the stylus leaves the touch sensitive display screen, the window is restored to a penetrated state so as to facilitate processing of subsequent input information.

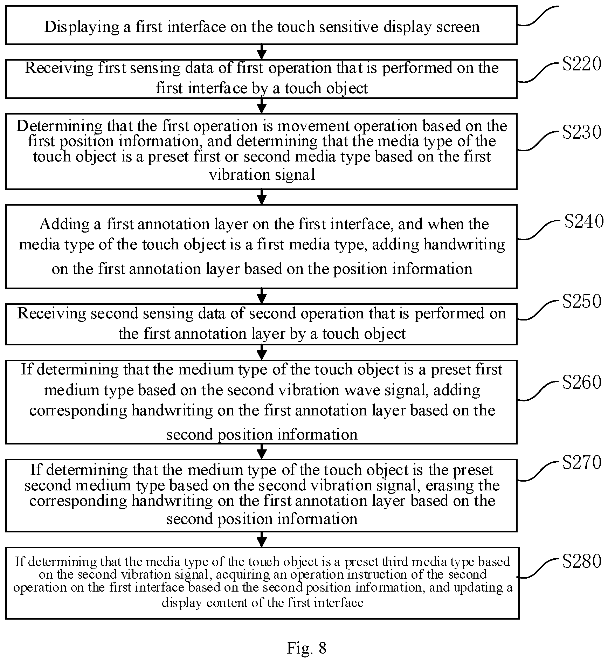

Fig. 8 is a flowchart of another fast annotation method according to the embodiment of the present disclosure. The fast annotation method is applied to an interactive white board, which includes a touch sensitive display screen and an acoustic vibration sensor. The touch sensitive display screen is configured to detect position information of the touch object, the acoustic vibration sensor is configured to detect vibration signal, and the vibration signal is used to determine a medium type of the touch object. As shown in Fig. 8, this method includes at least the following steps:

Step S210, displaying a first interface on the touch sensitive display screen.

Step S220, receiving first sensing data of first operation that is performed on the first interface by a touch object.

Therein, the first sensing data includes first position information detected by the touch sensitive display screen and a first vibration signal detected by the acoustic vibration sensor. When a touch object clicks or slides on the touch sensitive display screen, the interactive white board can receive the first sensing data. Therein, the first position information may be used to determine whether the current operation is clicking operation or movement operation, and the first position information includes the clicked position or slid position and path, while the first vibration signal may be used to determine the medium type of the current touch object.

In the process of using an interactive white board, the user interacts with the interactive white board, and the interactive white board detects the vibration signal when the touch object contacts with the touch sensitive display screen, so as to judge the medium type of the touch object. Therein, audio frequency below mechanical vibration, sound within the audio range, and ultrasonic waves beyond the audio frequency are all wave phenomena of gases, liquids, solids, and other media. In relative to light and electromagnetic waves, this wave phenomenon is called vibration wave.

The acoustic vibration sensor is installed at a position where the vibration that occurs on the display screen may be transmitted, so that an event where a touch object touches a touch sensitive display screen on the display screen can be detected, rather than necessarily being installed at the position where the vibration occurs. Acoustic vibration sensors may be arranged at the four corners of the display screen, but there are also other arrangement methods, such as arranging them at the midpoint of each edge of the rectangular border, and the quantity may also be other quantities, such as 2 or 5. As long as the acoustic vibration sensors can detect the vibration when the touch object contacts with the display screen during touch operation, the number of arrangements may be targeted based on the size and detection accuracy of the display screen. Generally speaking, the larger the size of the touch sensitive display screen, the higher the detection accuracy requirement, and the more acoustic vibration sensors are arranged. Acoustic vibration sensors may be directly installed on the surface of touch sensitive display screens, such as the upper surface or lower surface of touch sensitive display screens, so as to receive vibrations transmitted by touch sensitive display screens and improve the accuracy of touch detection. The acoustic vibration sensor may also be installed inside the frame of the touch sensitive display screen, which reduces the impact on the internal structure and reduces interference of common mode noise from the touch sensitive display screen. Obviously, acoustic vibration sensors may also be installed on other components that contact with touch sensitive displays, so as to receive vibrations that occur on touch sensitive display screens through the transmission of other components.

Acoustic vibration sensors may passively detect all vibration waves, or one or more thereof may actively excite vibration waves outward. The excited vibration waves may be detected by all acoustic vibration sensors. When external contact occurs on a cover plate of the touch sensitive display screen, vibration waves additionally generated are detected by all acoustic vibration sensors. The system may judge the medium type corresponding to external contact based on the signals generated by the combined action of multiple vibration waves.

When an object contacts (including point-contact and sliding) on the cover plate of a touch sensitive display screen, vibration waves having characteristic are generated. The vibration waves start from the contact point and propagate around the cover plate or inside the cover plate. The acoustic vibration sensor located at the screen border or inside the cover plate may convert the vibration signal into a sensing signal according to different detection methods. The sensing signal is transmitted to a processor with temperature compensation for amplification, and converted into a digital vibration signal. The vibration waves generated by different objects contacting with the cover plate of the display screen is different, and the corresponding vibration signals are also different. Herein, sensing signals include voltage signals, current signals, or magnetic flux signals.

Therefore, for the judgment of the medium type of the touch object, the interactive white board may pre-store data samples of the vibration signals of the first medium type, the second medium type, and the third medium type. By comparing the pre-stored data samples and the received vibration signals, the medium type of the touch object may be determined.

Step S230, determining that the first operation is movement operation based on the first position information, and determining that the medium type of the touch object is a preset first or second medium type based on the first vibration signal.

In the interactive white board, vibration signals corresponding to different touch objects are pre-stored, such as vibration signals corresponding to the first medium type. When the first vibration signal matches the pre-stored vibration signal, the corresponding medium type of the touch object may be determined.

Step S240, adding a first annotation layer on the first interface, and when the medium type of the touch object is a first medium type, adding handwriting on the first annotation layer based on the position information.

In one embodiment, the interactive white board may determine that the current operation is movement operation based on the first position information, and when the interactive white board determines that the first vibration signal matches the vibration signal of the pre-stored first medium type or matches the vibration signal of the second medium type, the interactive white board adds a first annotation layer on the first interface, and the touch object corresponding to the first vibration signal is of the first medium type, such as a stylus head, and then adds handwriting on the first annotation layer based on the first position information.

If a user uses a stylus to slide on a touch sensitive display screen, and for the interactive tablet, it receives the first sensing data, and the first position information includes a sliding position and path of the touch object, and the first vibration signal corresponds to the vibration signal of the first medium type, and then the interactive white board determines based on the first sensing data that the user uses a stylus to slide on the touch sensitive display screen, and thus, the interactive white board adds a first annotation layer on the first interface, and adds handwriting on the first annotation layer.

Step S250, receiving second sensing data of second operation that is performed on the first annotation layer by a touch object.

Therein, the second sensing data includes second position information detected by the touch sensitive display screen and a second vibration signal detected by the acoustic vibration sensor.

In one embodiment, after generating the first annotation layer, the click, sliding, and other operation of the touch object on the first annotation layer are considered as the second operation, and the corresponding second sensing data includes the second position information detected by the touch sensitive display screen of the interactive white board and the second vibration signal detected by the acoustic vibration sensor during the second operation of the touch object. The second position information includes the position and path for performing the second operation.

Step S260, if determining that the medium type of the touch object is a preset first medium type based on the second vibration signal, adding corresponding handwriting to the first annotation layer based on the second position information.

In one embodiment, when the second vibration signal matches the pre-stored vibration signal of the first medium type, the interactive white board determines that the current touch object is of the first medium type, such as a stylus head. The interactive white board adds handwriting on the first annotation layer, and the interactive white board determines the position and path of the handwriting on the first annotation layer based on the second position information, and displays it on the first annotation layer.

Step S270, if determining that the medium type of the touch object is the preset second medium type based on the second vibration signal, erasing the corresponding handwriting on the first annotation layer based on the second position information.

In one embodiment, when the second vibration signal matches the vibration signal of the pre-stored second medium type, the interactive white board determines that the current touch object is of the second medium type, such as the stylus tail. Correspondingly, the interactive white board erases the handwriting in the first annotation layer based on the second position information.

Step S280, if determining that the medium type of the touch object is a preset third medium type based on the second vibration signal, acquiring an operation instruction of the second operation on the first interface based on the second position information, and updating a display content of the first interface.

In an embodiment, when the second vibration signal matches the vibration signal of the pre-stored third medium type, the interactive white board determines that the current touch object is of the third medium type, such as a finger. Based on the second position information, the interactive white board obtains the operation instruction of the second operation on the first interface. For example, the interactive white board may determine that the position clicked by the finger of the user corresponds to the application icon on the application display layer based on the second position information, and then the operation instruction of the user for the first interface obtained by the interactive white board is to open the application, and thus, the interactive white board opens the application and displays the content of the application, that is, to update the display content of the first interface.

From the above solution, it can be seen that the interactive white board can determine whether the current touch object is being operated by clicking or moving based on the received first or second sensing data, and may also determine the medium type of the current touch object to respond differently, so that the interactive white board can achieve fast annotation, writes and erases as the touch object drops on the screen. Thus, the operation steps for annotation are more convenient and quick, and after generating an annotation layer, the display content may be operated with a finger without exiting the annotation application, that is, without closing the annotation layer. This can meet the growing interaction needs of users and provide a good interaction experience. In scenarios where annotation applications need to be used on interactive white boards, the solution proposed in the present disclosure can enable users to work more quickly and efficiently, resulting in an improved user experience.

In an embodiment, if the first operation is determined to be clicking operation based on the first position information, the display content of the first interface is updated based on the clicking operation.

It can be understood that when a user clicks on a touch sensitive display screen, the interactive white board may determine the clicking position of the current clicking operation based on the first position information, thereby updating the display content of the first interface. For example, during the usage of the interactive white board by the user, the user may use a touch object such as a finger or a stylus to click on an application icon on the first interface, and then the interactive white board opens the application, and updates the display content of the first interface to display the display content of the application.

In an embodiment, when a first annotation layer is displayed, when the interactive white board determines that the touch object is of the third medium type based on the second vibration signal, and determines that the operation of the touch object is clicking operation based on the second position information, and the click target is a writing application, the interactive white board opens the interface of the writing application and closes the first annotation layer, and inputs the handwriting on the first annotation layer into the interface of the writing application for being displayed.

In one embodiment, the interactive white board determines that the touch object is of the third medium type based on the second vibration signal, and the interactive white board may determine that the second operation performed by the current touch object is movement operation based on the second position information. The interactive white board does not respond to this operation on the first annotation layer. It can be understood that when the user uses the finger to slide on the first annotation layer, the interactive white board receives the second sensing data corresponding to the second operation on the first annotation layer, and the second vibration signal matches the vibration signal of the pre-stored third medium type, therefore, it is determined that the current touch object is of the third medium type, such as a finger. For sliding of the finger on the first annotation layer, the first annotation layer on the interactive white board does not respond to finger sliding, which means that the corresponding handwriting is not displayed on the first annotation layer.

In an embodiment, the interactive white board determines that the medium type of the touch object is the preset third medium type based on the second vibration signal, and determines that the second operation is a multi-touch operation based on the second position information, then erases the corresponding handwriting on the first annotation layer based on the multi-touch operation. It can be understood that in the process of multi-touch operation with fingers, the interactive white board needs to determine whether the touch object used by the user is of a third medium type based on the second vibration signal, such as fingers. The interactive white board also needs to determine that the current operation is a multi-touch operation based on the second position information for response, such as erasing the corresponding handwriting on the first annotation layer.

In one embodiment, for a user to click on an annotation control, the interactive white board needs to determine that the current operation is click operation on the annotation control based on the first position information. After the interactive white board determines that the current operation is click operation on the annotation control, a second annotation layer is added to the first interface.

During the annotation process of the user on the second annotation layer, the interactive white board receives third sensing data corresponding to the touch object for performing the third operation on the second annotation layer. Based on the third position information in the third sensor, it is determined that the current operation of the touch object is to slide on the second annotation layer, thereby adding or erasing handwriting on the second annotation layer. Corresponding to sliding by the first medium type such as the stylus head and the third medium type such as finger on the second annotation layer, the interactive white board adds handwriting on the second annotation layer. Corresponding to the second medium type, such as the sliding by the stylus tail on the second annotation layer, the interactive white board erases the corresponding handwriting on the second annotation layer.

In one embodiment, before the user clicks on the annotation control, the interactive white board needs to determine that the first annotation layer is not currently displayed. It is conceivable that for the generation of annotation layers, the interactive white board has a generation record that represents the status of the annotation layer, such as whether it has been displayed on a touchscreen. Therefore, the interactive white board may determine whether the first annotation layer is currently not displayed by querying the generation record.

In one embodiment, for a user to click on an attribute control, the interactive white board needs to determine whether the current operation is performed on the attribute control based on the third position information, such as selecting items on the attribute control, in order to update the display attribute of the third touch object such as the handwriting on the second annotation layer.

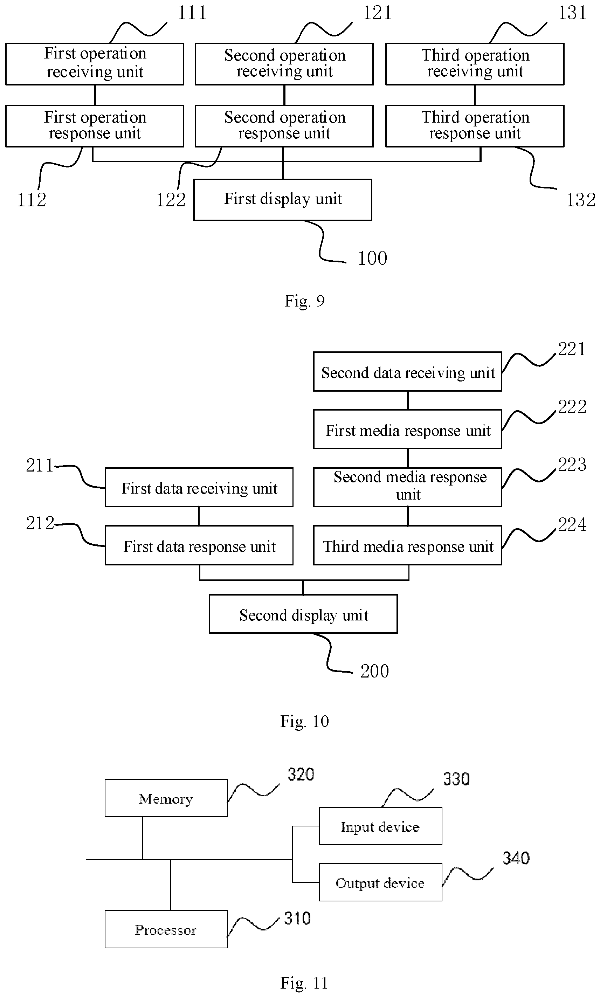

Fig. 9 is a structural block diagram of the fast annotation device according to the embodiment of the present disclosure. The device comprises:
a first display unit 100, configured to display a display content of a first interface;
a first operation receiving unit 111, configured to receive a first movement operation of a first or second touch object on the first interface;
a first operation response unit 112, configured to add a first annotation layer to the first interface based on the first movement operation, and add handwriting or erase handwriting on the first annotation layer based on the first movement operation;
a second operation receiving unit 121, configured to receive second movement operation of the first or second touch object on the first annotation layer;
a second operation response unit 122, configured to add handwriting on the first annotation layer based on the second movement operation of the first touch object, or erase corresponding handwriting on the first annotation layer based on the second movement operation of the second touch object;
a third operation receiving unit 131, configured to receive a second clicking operation of a third touch object on the first annotation layer. The medium type of the third touch object is a third medium type; and
a third operation response unit 132, configured to update a display content of the first interface based on the target clicked by the second clicking operation on the first interface.

From the above solution, it can be seen that the fast annotation device may respond through the corresponding first operation response unit, second operation response unit, and third operation response unit based on the operation received by the first operation receiving unit, second operation receiving unit, and third operation receiving unit, thus achieving fast annotation, which is more convenient and quick for the operation steps of annotation, This can meet the growing interaction needs of users, and can enable users to work more quickly and efficiently, resulting in an improved user experience.

On the basis of the above embodiments, the device further comprises a fourth operation receiving unit and a fourth operation response unit. The fourth operation receiving unit is configured to receive a second clicking operation of a first or second touch object on the first interface. The medium type of the first touch object is the first medium type, and the medium type of the second touch object is the second medium type. The fourth operation response unit is configured to update the display content of the first interface based on the second clicking operation.

On the basis of the above embodiments, a default window style of the first annotation layer can be penetrated. When the fourth operation receiving unit determines that the operation of the first or second touch object is received, the window style of the first annotation layer is changed to impenetrable state. When the fourth operation receiving unit determines that a case where the first or second touch object finished the operation has been received, the window style of the first annotation layer is changed to penetrable state.

On the basis of the above embodiments, the device further comprises a fifth operation response unit, and the fifth operation response unit may be configured to, if determining that a third movement operation of the third touch object on the first annotation layer is received, not respond to the third movement operation.

On the basis of the above embodiment, the fourth operation receiving unit may further be configured to receive multi-touch operation of the third touch object on the first annotation layer. The fourth operation receiving unit may further be configured to erase the corresponding handwriting on the first annotation layer based on the multi-touch operation.

On the basis of the above embodiments, the device further comprises a sixth operation receiving unit and a sixth operation response unit. The first operation receiving unit may further be configured to receive a third clicking operation of a touch object on the annotation control, and the touch object includes any one of the first touch object, the second touch object, and the third touch object. The first operation response unit may further be configured to add a second annotation layer on the first interface based on the third clicking operation. The sixth operation receiving unit is configured to receive a fourth movement operation of the touch object. The sixth operation response unit is configured to add or erase handwriting on the second annotation layer based on the fourth movement operation.

On the basis of the above embodiments, the first operation receiving unit may further be configured to receive the third clicking operation of the touch object on the annotation control in a state where the first annotation layer is not displayed.

On the basis of the above embodiments, the device further comprises a seventh operation receiving unit and a seventh operation response unit. The seventh operation receiving unit is configured to receive selection operation of the third touch object on an attribute control. The seventh operation response unit is configured to change the display attribute of the handwriting corresponding to the third touch object based on the selection operation.

On the basis of the above embodiments, the first operation receiving unit may also be configured to receive a start operation of a mode switching control for be received. The first operation response unit may further be configured to start fast annotation mode in response to the start operation.

On the basis of the above embodiments, the device further comprises an eighth operation receiving unit and an eighth operation response unit. The fourth operation response unit may further be configured to open an interface of the writing application and close the first annotation layer based on the writing application icon clicked by the first clicking operation on the first interface. The eighth operation receiving unit is configured to receive a fifth movement operation of a touch object on the interface of the writing application. The eighth operation response unit is configured to add or erase handwriting on the interface of the writing application based on the fifth movement operation.

On the basis of the above embodiments, the fourth operation response unit may further be configured to open a hyperlink and update the display content of the first interface based on the hyperlink clicked on a presentation interface of the first clicking operation.

On the basis of the above embodiments, the fourth operation response unit may further be configured to open the presentation page corresponding to the page turning control and update the display content of the first interface based on the page turning control clicked on a document presentation interface by the first clicking operation.

Fig. 10 is a structural block diagram of another fast annotation device according to another embodiment of the present disclosure. The device comprises:
a second display unit 200, configured to display a display content of a first interface;
a first data receiving unit 211, configured to receive first sensing data of first operation that is performed on the first interface by a touch object. The first sensing data includes first position information detected by a touch sensitive display screen and a first vibration signal detected by an acoustic vibration sensor;
a first data response unit 212, configured to determine that the first operation is movement operation based on the first position information, and determine that the medium type of the touch object is a preset first or second medium type based on the first vibration signal;
to add a first annotation layer on the first interface, and when the medium type of the touch object is a first medium type, add handwriting on the first annotation layer based on the position information;
a second data receiving unit 221, configured to receive second sensing data of second operation that is performed on the first annotation layer by a touch object. The second sensing data includes second position information detected by the touch sensitive display screen and a second vibration signal detected by the acoustic vibration sensor;
a first media response unit 222, configured to, if determining that the medium type of the touch object is a preset first medium type based on the second vibration signal, add corresponding handwriting to the first annotation layer based on the second position information;
a second media response unit 223, configured to, if determining that the medium type of the touch object is a preset first medium type based on the second vibration signal, erase corresponding handwriting to the first annotation layer based on the second position information; and
a third media response unit 224, configured to, if determining that the medium type of the touch object is a preset third medium type based on the second vibration signal, acquire an operation instruction of the second operation on the first interface based on the second position information, and update a display content of the first interface.

On the basis of the above embodiments, the device further comprises a second data response unit. The second data response unit is configured to, if determining that the first operation is clicking operation based on the first position information, update the display content of the first interface based on the clicking operation.

On the basis of the above embodiments, the third medium response unit is further configured to determine that a target of the second operation is a writing application icon based on the second position information, open the interface of the writing application, close the first annotation layer, and input the handwriting on the first annotation layer into the interface of the writing application for being displayed.

On the basis of the above embodiments, the device further comprises a fourth medium response unit. The fourth medium response unit is configured to, if determining that the medium type of the touch object is a preset third medium type based on the second vibration signal, and that the second operation is movement operation based on the second position information, not respond to the second operation.

On the basis of the above embodiment, the third medium response unit may further be configured to, if determining that the medium type of the touch object is a preset third medium type based on the second vibration signal, and that the second operation is a multi-touch operation based on the second position information, erasing the corresponding handwriting on the first annotation layer based on the multi-touch operation.

On the basis of the above embodiments, the device further comprises a third data receiving unit and a third data response unit. The first data response unit may further be configured to, if determining that the first operation is clicking operation on the annotation control based on the first position information, add a second annotation layer on the first interface. The third data receiving unit is configured to receive the third sensing data of performing the third operation on the second annotation layer by the touch object. The third sensing data includes the third position information detected by the touch sensitive display screen and a third vibration signal detected by the acoustic vibration sensor. The third data response unit is configured to, if determining that the third operation is movement operation based on the third position information, add or erase handwriting on the second annotation layer.

On the basis of the above embodiments, the first data response unit may further be configured to determine that the first annotation layer is not currently displayed.

On the basis of the above embodiments, the third medium response unit may further be configured to, if determining that the third operation is an operation on the attribute control based on the third position information and the third vibration signal, update the display attribute of the handwriting corresponding to the third touch object based on the operation of the attribute control.

Fig. 11 is a structural schematic diagram of an interactive white board according to an embodiment of the present disclosure. The interactive white board includes a processor 310, a memory 320, an input device 330, and an output device 340. The number of processors 310 in the apparatus may be one or more, and Fig. 11 takes one processor 310 as an example. The processor 310, memory 320, input device 330, and output device 340 in the apparatus may be connected through a bus or other means, and Fig. 11 takes bus connection as an example. The memory 320, as a computer-readable storage medium, may be configured to store software programs, computer executable programs, and modules, such as program instructions/modules corresponding to the fast annotation method in the embodiment of the present disclosure. The processor 310 executes various functional applications and data processing of the apparatus by running software programs, instructions, and modules stored in the memory 320, that is, achieving the video encoding control method mentioned above. The input device 330 may be configured to receive input digital or character information, as well as generate key signal inputs related to user settings and functional control of the device. The output device 340 may include display apparatus such as touch sensitive displays.

According to the embodiment of the present disclosure, a storage medium including computer executable instructions is further provided, and the computer executable instructions are used to perform relevant operation in the fast annotation method provided in any embodiment of the present disclosure when being executed by a computer processor, and have corresponding functions and beneficial effects.

Those skilled in the art should understand that the embodiments of the present disclosure may be provided as a method, a system, or a computer program product.

Therefore, the present disclosure may adopt the form of a complete hardware embodiment, a complete software embodiment, or an embodiment combining software and hardware. Moreover, the present disclosure may adopt the form of a computer program product implemented on one or more computer-usable storage medium (which may include disk storage, CD-ROM, optical storage, etc.) containing computer-usable program codes. The present disclosure is described with reference to flowcharts and/or block diagrams of methods, devices (systems), and computer program products in embodiments of the present disclosure. It should be understood that each process and/or block in the flowchart and/or block diagram, and the combination of processes and/or blocks in the flowchart and/or block diagram may be implemented by computer program instructions. These computer program instructions may be provided to the processor of a general-purpose computer, a special-purpose computer, an embedded processor, or other programmable data processing equipment to generate a machine, so that with the instructions executed by the processor of the computer or other programmable data processing equipment, a device that is configured to implement the functions specified in one process or multiple processes in the flowchart and/or one block or multiple blocks in the block diagram is generated. These computer program instructions may also be stored in a computer-readable memory that may direct a computer or other programmable data processing equipment to work in a specific manner, so that the instructions stored in the computer-readable memory produce an article of manufacture including the instruction device. The instruction device implements the functions specified in one process or multiple processes in the flowchart and/or one block or multiple blocks in the block diagram. These computer program instructions may also be loaded on a computer or other programmable data processing equipment, so that a series of operation steps are executed on the computer or other programmable equipment to produce computer-implemented processing, thus the instructions executed on the computer or other programmable equipment provide steps for implementing functions specified in a flow or multiple flows in the flowchart and/or a block or multiple blocks in the block diagram.

In a typical configuration, the computing device includes one or more processors (CPUs), input/output interfaces, network interfaces, and memory. The memory may include non-permanent memory, random access memory (RAM) and/or non-volatile memory, etc.in a computer-readable medium, such as read-only memory (ROM) or flash memory (flash RAM). The memory is an example of a computer-readable medium.

Computer-readable storage medium include permanent and non-permanent, removable and non-removable media, and information storage may be achieved by any method or technology. The information may be computer-readable instructions, data structures, program modules, or other data. Examples of computer-readable storage medium include, but are not limited to: phase change memory (PRAM), static random access memory (SRAM), dynamic random access memory (DRAM), other types of random access memory (RAM), read-only memory (ROM), electrically erasable programmable read-only memory (EEPROM), flash memory or other memories, compact disc read-only memory (CD-ROM), digital versatile disc (DVD) or other optical storage, magnetic cassette tape, magnetic disk storage or other magnetic storage devices or any other non-transmission media which may be configured to store information capable of being accessed by computing devices. According to the definition in the present disclosure, computer-readable media does not include transitory media, such as modulated data signals and carrier waves.

It should also be noted that the terms "include", "comprise" or any other variants thereof are intended to cover non-exclusive inclusion, so that a process, method, commodity or equipment including a series of elements not only includes those elements, but also includes other elements that are not explicitly listed, or also include elements inherent to such processes, methods, commodities, or equipment. If there are no more restrictions, the element defined by the sentence "including a..." does not exclude the existence of other identical elements in the process, method, commodity, or equipment that includes the element.

It should be noted that the above is only preferred embodiments of the present disclosure and the applied technical principle. Those skilled in the art will understand that the present disclosure is not limited to the specific embodiments described herein, and it is possible for those skilled in the art to make various obvious changes, readjustments and substitutions without departing from the claimed scope of the present disclosure. Therefore, although the present disclosure has been described in more detail through the above embodiments, the present disclosure is not limited to the above embodiments, and may include more equivalent embodiments without departing from the inventive concept. The scope of the present disclosure is determined by the scope of the appended claims.

## Claims

1. A fast annotation method performed by an interactive white board, wherein the interactive white board includes a touch sensitive display screen, comprising:
displaying a first interface on the touch sensitive display screen;
receiving a first movement operation of a first or second touch object on the first interface;
adding a first annotation layer on the first interface based on the first movement operation;
adding handwriting on the first annotation layer based on the first movement operation;
receiving a second movement operation of the first touch object or a second touch object on the first annotation layer;
adding handwriting on the first annotation layer based on the second movement operation of the first touch object, or erasing handwriting on the first annotation layer based on the second movement operation of the second touch object;
receiving a first clicking operation of a third touch object on the first annotation layer; and
updating a display content of the first interface based on a target clicked by the first clicking operation on the first interface.

2. The fast annotation method of claim 1, further comprising:
receiving a second clicking operation of the first or second touch object on the first interface, wherein a medium type of the first touch object is a first medium type, and a medium type of the second touch object is a second medium type; and
updating the display content of the first interface based on the second clicking operation.

3. The fast annotation method of claim 1, wherein a default window style of the first annotation layer is penetrable, after receiving the second movement operation of the first or second touch object on the first annotation layer, further comprising:
in response to that the operation of the first or second touch object is received, changing the window style of the first annotation layer from a penetrable state to an impenetrable state; and
in response to that the operation of the first or second touch object is ended, changing the window style of the first annotation layer from the impenetrable state to the penetrable state.

4. The fast annotation method of claim 1, further comprising:
in a case determining that a third movement operation of the third touch object on the first annotation layer is received, not responding to the third movement operation.

5. The fast annotation method of claim 1, further comprising:
receiving a multi-touch operation of the third touch object on the first annotation layer; and
erasing the corresponding handwriting on the first annotation layer based on the multi-touch operation.

6. The fast annotation method of claim 2, wherein an annotation control is displayed on the first interface; after displaying the first interface on the touch sensitive display screen; the fast annotation method further comprise:
receiving a third clicking operation of a touch object on an annotation control, wherein the touch object includes any one of the first touch object, the second touch object, and the third touch object;
adding a second annotation layer on the first interface based on the third clicking operation;
receiving a fourth movement operation of the touch object; and
adding or erasing handwriting on the second annotation layer based on the fourth movement operation.

7. The fast annotation method of claim 6, wherein the receiving the third clicking operation of the touch object on the annotation control comprises:
receiving the third clicking operation of the touch object on the annotation control in a state where the first annotation layer is not displayed.

8. The fast annotation method of claim 1 or 6, wherein an attribute control is displayed on the first interface, the fast annotation method further comprises:
receiving a selection operation of the first touch object on an attribute control; and
changing a display attribute of the handwriting corresponding of the first touch object, based on the selection operation.

9. The fast annotation method of claim 2, wherein a mode switching control is displayed on the first interface, before receiving the second clicking operation of the first or second touch object on the first interface, the fast annotation method further comprises:
receiving a start operation of the mode switching control; and
starting the fast annotation mode in response to the start operation.

10. The fast annotation method of any one of claims 1-7, wherein the updating the display content of the first interface based on the target clicked by the first clicking operation on the first interface comprises:
opening an interface of a writing application and closing the first annotation layer based on a writing application icon clicked by the first clicking operation on the first interface;
receiving a fifth movement operation of a touch object on the interface of the writing application; and
adding or erasing handwriting on the interface of the writing application based on the fifth movement operation.

11. The fast annotation method of claim 10, wherein after opening the interface of the writing application and closing the first annotation layer based on the writing application icon clicked by the first clicking operation on the first interface, the fast annotation method further comprises:
inputting the handwriting on the first annotation layer into the interface of the writing application for being displayed.

12. The fast annotation method of claim 1, wherein the first interface is a document presentation interface, and a hyperlink is displayed on the first interface,and
the updating the display content of the first interface based on the target clicked by the first clicking operation on the first interface comprises:
opening a hyperlink based on the hyperlink clicked by the first clicking operation on the document presentation interface; and
updating the display content of the first interface.

13. The fast annotation method of claim 12, wherein a page turning control is further displayed om the first interface,and
the updating the display content of the first interface based on the target clicked by the first clicking operation on the first interface comprises:
opening a page of the presentation document corresponding to the page turning control based on the page turning control clicked by the first clicking operation on the document presentation interface; and
updating the display content of the first interface.

14. The fast annotation method of claim 1, wherein the first interface is a media playback interface, and
the updating the display content of the first interface based on the target clicked by the first clicking operation on the first interface comprises:
updating a the media content played on the media playback interface based on the target clicked by the first clicking operation on the media playback interface.

15. The fast annotation method of claim 1, wherein a save control is further displayed on the first interface, and the fast annotation method further comprises:
receiving a fourth clicking operation of the touch object on a save control, wherein the touch object includes any one of the first touch object, the second touch object, and the third touch object; and
saving the annotation content on the first annotation layer based on the fourth clicking operation.

16. The fast annotation method of claim 1, wherein the touch object further includes a fourth touch object, and the fast annotation method further comprises:
receiving a sixth movement operation of the fourth touch object;
adding handwriting on the first annotation layer based on the sixth movement operation; and
displaying the handwriting in a handwriting color different from the handwriting color of the first touch object.

17. A fast annotation method performed by an interactive white board, wherein the interactive white board includes a touch sensitive display screen and an acoustic vibration sensor, the touch sensitive display screen is configured to detect position information of a touch object, the acoustic vibration sensor is configured to detect a vibration signal, and the vibration signal is used to determine a medium type of the touch object, the fast annotation method comprises:
displaying a first interface on the touch sensitive display screen;
receiving first sensing data of first operation that is performed on the first interface by a touch object, wherein the first sensing data includes first position information detected by the touch sensitive display screen and a first vibration signal detected by the acoustic vibration sensor;
in a case of determining that the first operation is movement operation based on the first position information, and determining that the medium type of the touch object is a preset first or second medium type based on the first vibration signal, adding a first annotation layer on the first interface, and when the medium type of the touch object is a first medium type, adding handwriting on the first annotation layer based on the position information;
receiving second sensing data of second operation that is performed on the first annotation layer by a touch object, wherein the second sensing data includes second position information detected by the touch sensitive display screen and a second vibration signal detected by the acoustic vibration sensor;
in a case of determining that the medium type of the touch object is a preset first medium type based on the second vibration signal, adding handwriting to the first annotation layer based on the second position information;
in a case of determining that the medium type of the touch object is the preset second medium type based on the second vibration signal, erasing handwriting on the first annotation layer based on the second position information; or
in a case of determining that the medium type of the touch object is a preset third medium type based on the second vibration signal, acquiring an operation instruction of the second operation on the first interface based on the second position information, and updating a display content of the first interface.

18. The fast annotation method of claim 17, further comprising:
in a case of determining that the first operation is clicking operation based on the first position information, updating the display content of the first interface based on the clicking operation.

19. The fast annotation method of claim 17, wherein in a case of determining that the medium type of the touch object is the preset third medium type based on the second vibration signal, the acquiring the operation instruction of the second operation on the first interface based on the second position information, and updating the display content of the first interface comprises:
in a case of determining that the second operation is targeted to a writing application icon based on the second position information, opening an interface for the writing application, and closing the first annotation layer; and
inputting the handwriting on the first annotation layer into the interface of the writing application for being displayed.

20. The fast annotation method of claim 17, further comprising:
in a case of determining that the medium type of the touch object is a preset third medium type based on the second vibration signal, and that the second operation is movement operation based on the second position information, not responding to the second operation.

21. The fast annotation method of claim 17, further comprising:
in a case of determining that the medium type of the touch object is a preset third medium type based on the second vibration signal, and that the second operation is a multi-touch operation based on the second position information, erasing the corresponding handwriting on the first annotation layer based on the multi-touch operation.

22. The fast annotation method of claim 17, wherein an annotation control is displayed on the first interface; after the touch sensitive display screen displays the first interface, the fast annotation method further comprises:
in a case of determining that the first operation is clicking operation on the annotation control based on the first position information, adding a second annotation layer to the top of the touch sensitive display screen;
receiving third sensing data of the third operation performed on the second annotation layer, wherein the third sensing data includes third position information detected by the touch sensitive display screen and third vibration signal detected by the acoustic vibration sensor; and
in a case of determining that the third operation is movement operation based on the third position information, adding or erasing handwriting on the second annotation layer.

23. The fast annotation method of claim 22, wherein before determining that the first operation is the clicking operation on the annotation control based on the first position information, the fast annotation method further comprises:
determining that the first annotation layer is not currently displayed.

24. The fast annotation method of claim 22, wherein an attribute control is displayed on the first interface, the fast annotation method further comprises:
determining that the third operation is an operation on the attribute control based on the third position information and the third vibration signal; and
updating the display attribute of the handwriting corresponding to the third touch object based on the operation of the attribute control.

25. A fast annotation method performed by an interactive white board, wherein the interactive white board includes a touch sensitive display screen, and the fast annotation method comprises:
displaying a document presentation interface on the touch sensitive display screen;
receiving a first movement operation of a first touch object on the document presentation interface;
adding a first annotation layer on the document presentation interface based on the first movement operation, and adding handwriting on the first annotation layer based on a first movement operation;
receiving second movement operation of the first or second touch object on the first annotation layer;
adding handwriting on the first annotation layer based on the second movement operation of the first touch object, or erasing corresponding handwriting on the first annotation layer based on the second movement operation of the second touch object;
receiving first clicking operation of a third touch object on the first annotation layer, wherein a medium type of the third touch object is a third medium type; and
updating a display content of the document presentation interface based on a target clicked by the first clicking operation on the document presentation interface.

26. The fast annotation method of claim 25, wherein before the touch sensitive display screen displays the document presentation interface, the fast annotation method further comprises:
receiving first screen casting data transmitted by the terminal device, and displaying a document presentation interface on the touch sensitive display screen based on the first screen data.

27. The fast annotation method of claim 26, wherein the updating the display content of the document presentation interface based on the target clicked by the first clicking operation on the document presentation interface comprises:
generating operation data based on the target clicked by the first clicking operation on the document presentation interface, and sending the operation data to the terminal device;
receiving the second screen casting data transmitted by the terminal device, wherein the second screen casting data is acquired after the terminal device responds to the operation data; and
updating the display content of the document presentation interface based on the second screen casting data.

28. The fast annotation method of claim 27, wherein the display content of the updated presentation interface comprises page-up, page-down, or opening a hyperlink.

29. A fast annotation device, comprising:
a first display unit, configured to display a display content of a first interface;
a first operation receiving unit, configured to receive a first movement operation of a first or second touch object on the first interface;
a first operation response unit, configured to add a first annotation layer to the first interface based on the first movement operation, and add handwriting or erase handwriting on the first annotation layer based on the first movement operation;
a second operation receiving unit, configured to receive second movement operation of the first or second touch object on the first annotation layer;
a second operation response unit, configured to add handwriting on the first annotation layer based on the second movement operation of the first touch object, or erase corresponding handwriting on the first annotation layer based on the second movement operation of the second touch object;
a third operation receiving unit, configured to receive first clicking operation of a third touch object on the first annotation layer; and
a third operation response unit, configured to update a display content of the first interface based on the target clicked by the first clicking operation on the first interface.

30. A fast annotation device, comprising:
a second display unit, configured to display a display content of a first interface;
a first data receiving unit, configured to receive first sensing data of first operation that is performed on the first interface by a touch object, wherein the first sensing data includes first position information detected by a touch sensitive display screen and a first vibration signal detected by an acoustic vibration sensor;
a first data response unit, configured to, in a case of determining that the first operation is movement operation based on the first position information, and determining that the medium type of the touch object is a preset first or second medium type based on the first vibration signal; add a first annotation layer on the first interface, and when the medium type of the touch object is a first medium type, add handwriting on the first annotation layer based on the position information;
a second data receiving unit, configured to receive second sensing data of second operation that is performed on the first annotation layer by a touch object, wherein the second sensing data includes second position information detected by the touch sensitive display screen and a second vibration signal detected by the acoustic vibration sensor;
a first media response unit, configured to, in a case of determining that the medium type of the touch object is a preset first medium type based on the second vibration signal, add corresponding handwriting to the first annotation layer based on the second position information;
a second media response unit, configured to, in a case of determining that the medium type of the touch object is a preset first medium type based on the second vibration signal, add corresponding handwriting to the first annotation layer based on the second position information; and
a third media response unit, configured to, in a case of determining that the medium type of the touch object is a preset third medium type based on the second vibration signal, acquire an operation instruction of the second operation on the first interface based on the second position information, and update a display content of the first interface.

31. An interactive white board, including a touch sensitive display screen and an acoustic vibration sensor, wherein the interactive white board further comprises:
one or more processors;
a memory, configured to store one or more programs;
wherein the one or more programs, when executed by the one or more processors, casues the one or more processors to perform the fast annotation method of any one of claims 1-28.

32. A storage medium storing computer executable instructions, wherein the computer executable instructions when executed by a processor, perform the fast annotation method of any one of claims 1-28.
